# EUROPÄISCHE PATENTANMELDUNG

(11) **EP 2 148 261 A1**
(43) Veröffentlichungstag der Anmeldung: **27.01.2010**
(21) Anmeldenummer: 09008720.6
(22) Anmeldetag: 03.07.2009
(51) Int. Cl.: G06F 3/01

(54) **Verfahren und Vorrichtung zum Informieren eines Nutzers über die Lage einer Informationsquelle in Bezug auf die Nutzerposition**

(30) Priorität: 21.07.2008 DE 102008034200
(71) Anmelder: Astrium GmbH, 82024 Taufkirchen (DE)
(72) Erfinder: Trautenberg, Hans L., Dr., 85521 Ottobrunn (DE)
(74) Vertreter: Hummel, Adam

(57) **Zusammenfassung**

Die Erfindung betrifft ein Verfahren zum Informieren eines Nutzers über die Lage einer Informationsquelle in Bezug auf die Nutzerposition, mit den folgenden Schritten:
Ermitteln der Lage einer Informationsquelle in Bezug auf die Nutzerposition (S10) und

Erzeugen von taktilen und/oder elektrischen Reizen zum unmittelbaren Einwirken auf den Nutzer an einer der ermittelten Lage der Informationsquelle entsprechenden Position (S12).

## Beschreibung

Die Erfindung betrifft ein Verfahren und eine Vorrichtung zum Informieren eines Nutzers über die Lage einer Informationsquelle in Bezug auf die Nutzerposition gemäß Anspruch 1 bzw. 6.

Bei Situations-, Warnungs- und Situations-Awareness-Systemen wird häufig ein Tonsignal verwendet, um dem Nutzer Informationen über die Lage einer Gefahrenquelle in Bezug auf die Nutzerposition zukommen zu lassen. Ein Anwendungsbeispiel für derartige Systeme ist die Warnung eines Piloten vor Gefahrenquellen wie beispielsweise sich dem eigenen Flugzeug nähernde Flugobjekte.

Die US2007/0168114 A1 beschreibt ein Kommunikationssystem, das es einem Nutzer ermöglicht, die relative räumliche Lage von Objekten wahrzunehmen. Hierzu werden vom System synthetische Klanghinweise erzeugt, welche die relative Lage eines Objekts repräsentieren. Dieses System eignet sich beispielsweise zum Feststellen der Position eines an einer Telefonkonferenz teilnehmende Sprechers oder der Position eines ferngesteuerten Flugobjekts, das sich im Landeanflug befindet. Durch Modifikation des Klanghinweises kann die Richtung identifiziert werden, aus welcher eine Kommunikation, Information oder Warnung kommt.

Aufgabe der vorliegenden Erfindung ist es nun, ein verbessertes Verfahren und eine verbesserte Vorrichtung zum Informieren eines Nutzers über die Lage einer Informationsquelle in Bezug auf die Nutzerposition.

Diese Aufgabe wird durch ein Verfahren und eine Vorrichtung zum Informieren eines Nutzers über die Lage einer Informationsquelle in Bezug auf die Nutzerposition mit den Merkmalen von Anspruch 1 bzw. 6 gelöst. Weitere Ausgestaltungen der Erfindung sind Gegenstand der abhängigen Ansprüche.

Ein wesentlicher Gedanke der Erfindung besteht darin, dass zur Information über die Lage einer Informationsquelle wie beispielsweise eines sich nähernden Flugobjekts taktile und/oder elektrische Reize einem Nutzer zugeleitet werden. Derartige Reize eigenen sich besser als Töne, um die Lage der Informationsquelle festzustellen, da sie unmittelbar auf den Körper des Nutzers einwirken und daher weniger störanfällig als Schallsignale sind.

Eine Ausführungsform der Erfindung sieht ein Verfahren zum Informieren eines Nutzers über die Lage einer Informationsquelle in Bezug auf die Nutzerposition vor, wobei das Verfahren die folgenden Schritte aufweist:
Ermitteln der Lage einer Informationsquelle in Bezug auf die Nutzerposition und Erzeugen von taktilen und/oder elektrischen Reizen zum unmittelbaren Einwirken auf den Nutzer an einer der ermittelten Lage der Informationsquelle entsprechenden Position. Damit kann beispielsweise ein Pilot über die Lage eines sich ihm nähernden Objekts sicher und zuverlässig gewarnt werden, da im Unterschied zu akustischen Signalen die taktilen und elektrischen Reize unmittelbar auf den Piloten einwirken und somit weniger störanfällig sind. Außerdem kann die derart signalisierte Lage einer Informationsquelle so vom Benutzer besser von beispielsweise anderen signalisierten Informationsquellen unterschieden werden.

Das Erzeugen von taktilen und/oder elektrischen Reizen kann gemäß einer weiteren Ausführungsform der Erfindung das Erzeugen von Steuersignalen für Aktuatoren zum unmittelbaren Einwirken auf den Nutzer und Übermitteln der erzeugten Steuersignale an die Aktuatoren umfassen. Diese Aktuatoren befinden sich typischerweise unmittelbar am Körper des Nutzers, beispielsweise eingearbeitet in einen Anzug wie einen Pilotenanzug, so dass eine möglichst gut wahrnehmbare unmittelbare Einwirkung von Reizen auf den Nutzer erfolgen kann.

Die Aktuatoren können gemäß einer Ausführungsform der Erfindung taktile und/oder elektrische Aktuatoren aufweisen. Beispielsweise können Elektroden als Aktuatoren vorgesehen sein, über die ein vom Nutzer wahrnehmbarer, aber selbstverständlich unschädlicher elektrischer Strom geleitet wird. Ebenso können mechanische Aktuatoren zum Erzeugen taktiler Reize verwendet werden, wie beispielsweise kleine elektromagnetische gesteuerte Aktuatoren, die über elektrische Signale aktiviert werden können. Die taktilen Aktuatoren können beispielsweise druck- oder vibrationserzeugende Aktuatoren aufweisen. Ebenso können Berührungsaktuatoren verwendet werden, d.h. Aktuatoren, die bei Aktivierung die Haut des Nutzers berühren. Wesentlich ist, dass die taktilen Aktuatoren Mechanorezeptoren in der Haut des Nutzers reizen können.

Gemäß einer weiteren Ausführungsform der Erfindung kann das Erzeugen von taktilen und/oder elektrischen Reizen zum unmittelbaren Einwirken auf den Nutzer ferner das Einstellen der Intensität der Reize abhängig von Parametern der Informationsquelle umfasst. Damit kann zur Lage eine weitere Information an die Nutzer übermittelt werden.

Ein Parameter der Informationsquelle kann vor allem einer aus den folgenden sein: Entfernung der Informationsquelle vom Nutzer; Grad der Gefährdung des Nutzers durch die Informationsquelle; Geschwindigkeit der Informationsquelle; Bewegungsrichtung der Informationsquelle. Beispielsweise kann bei einer geringen Entfernung zur Informationsquelle durch eine hohe Intensität der erzeugten Reize dem Nutzer signalisiert werden, dass möglicherweise Gefahr droht wie beispielsweise im Flugverkehr, wenn sich einem Flugzeug einer anderes Flugzeug nähert und nur noch einen geringen Abstand zum Flugzeug besitzt.

Eine weitere Ausführungsform der Erfindung sieht eine Vorrichtung zum Informieren eines Nutzers über die Lage einer Informationsquelle in Bezug auf die Nutzerposition vor, wobei die Vorrichtung folgendes aufweist:
Mittel zum Ermitteln der Lage einer Informationsquelle in Bezug auf die Nutzerposition und
Mittel zum Erzeugen von taktilen und/oder elektrischen Reizen zum unmittelbaren Einwirken auf den Nutzer an einer der ermittelten Lage der Informationsquelle entsprechenden Position. Diese Vorrichtung kann beispielsweise als tragbares Gerät ausgebildet sein, das in einem Fahrzeug von einem Fahrzeugführer, insbesondere in einem Flugzeug von einem Piloten mitgeführt und als zusätzliche Warnvorrichtung verwendet werden kann.

Die Mittel zum Erzeugen von taktilen und/oder elektrischen Reizen können gemäß einer Ausführungsform der Erfindung Mittel zum Erzeugen von Steuersignalen für Aktuatoren zum unmittelbaren Einwirken auf den Nutzer und Übermitteln der erzeugten Steuersignale an die Aktuatoren umfassen.

Gemäß einer weiteren Ausführungsform der Erfindung können die Aktuatoren taktile und/oder elektrische Aktuatoren aufweisen.

Weiterhin können die Mittel zum Erzeugen von taktilen und/oder elektrischen Reizen zum unmittelbaren Einwirken auf den Nutzer in einer Ausführungsform der Erfindung ferner derart ausgebildet sein, dass sie Intensität der Reize abhängig von Parametern der Informationsquelle einstellen können.

Ein Parameter der Informationsquelle kann gemäß einer Ausführungsform der Erfindung einer aus den folgenden sein: Entfernung der Informationsquelle vom Nutzer; Grad der Gefährdung des Nutzers durch die Informationsquelle; Geschwindigkeit der Informationsquelle; Bewegungsrichtung der Informationsquelle.

Schließlich betrifft die Erfindung noch in einer Ausführungsform einen Anzug für einen Nutzer, insbesondere einen Pilotenanzug, der taktile und/oder elektrische Aktuatoren aufweist und zum Betrieb mit einer Vorrichtung nach der Erfindung und wie vorstehend beschrieben ausgebildet ist. Beispielsweise kann der Anzug eine Schnittstelle zum Anschließen der Vorrichtung aufweisen, über welche Steuersignale für die im Anzug vorhandenen Aktuatoren übertragen werden.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:
- Fig. 1: ein Ausführungsbeispiel einer Vorrichtung zum Informieren eines Nutzers über die Lage einer Informationsquelle in Bezug auf die Nutzerposition gemäß der Erfindung; und
- Fig. 2: ein Flussdiagramm eines Ausführungsbeispiels eines Verfahrens zum Informieren eines Nutzers über die Lage einer Informationsquelle in Bezug auf die Nutzerposition gemäß der Erfindung.

Im Folgenden können gleiche und/oder funktional gleiche Elemente mit den gleichen Bezugszeichen versehen sein.

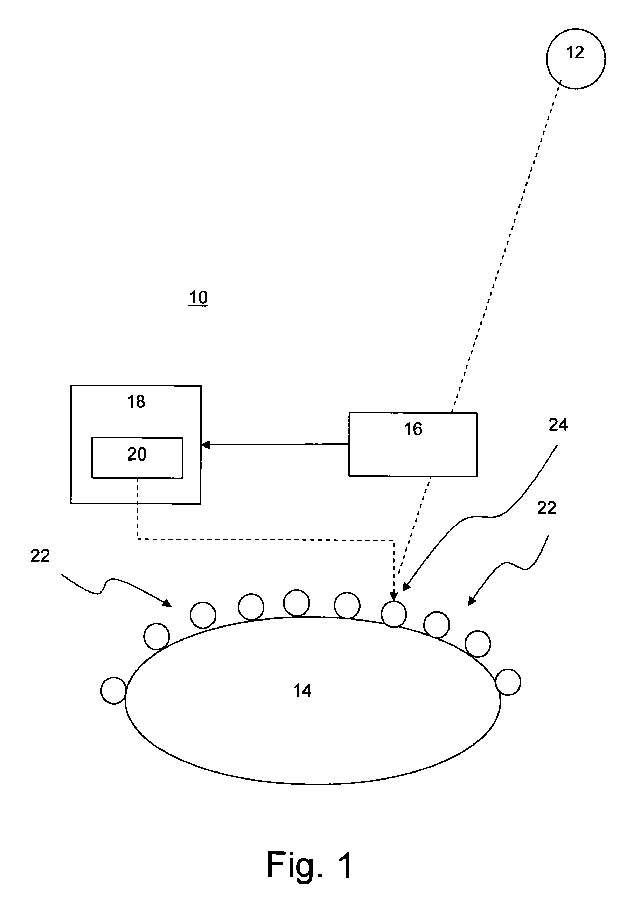

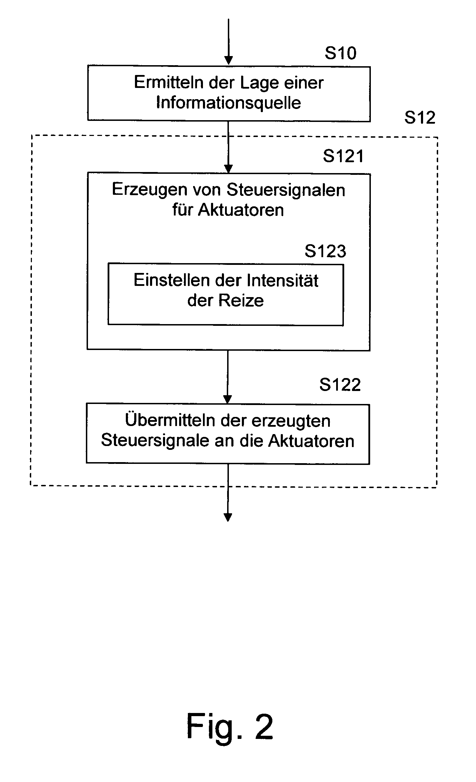

Fig. 1 zeigt einen Nutzer 14, beispielsweise einen Piloten, und ein Objekt 12 als Informationsquelle, das sich in Bezug auf die Position des Nutzers 14 etwa bei einer Position zwischen 1 und 2 Uhr befindet. Der Nutzer weist an seinem Körper Aktuatoren 22 auf, beispielsweise Elektroden und/oder kleine Vibratoren. Die in Fig. 2 gezeigte erfindungsgemäße Vorrichtung 10 umfasst neben den Aktuatoren 22 Mittel zum Ermitteln der Lage der Informationsquelle 12 in Bezug auf die Nutzerposition 14, beispielsweise eine Kamera mit einem Bildverarbeitungsprozessor, der die Kamerabilder auf Objekte und deren Position in Bezug auf die Kameraposition auswertet. Hierbei sei angenommen, dass die Position der Mittel 16 etwa der Position 14 des Nutzers entspricht, so dass die mit den Mitteln 16 erfasste Lage des Objekts 12 etwa die auch vom Nutzer erfasste Lage widerspiegelt. Weiterhin sind Mittel 18 zum Erzeugen von taktilen und/oder elektrischen Reizen zum unmittelbaren Einwirken auf den Nutzer vorgesehen. Die Mittel 18 verarbeiten die von den Mitteln 16 zugeführten Auswertungsdaten der Lage des Objekts 12 in Bezug auf die Nutzerposition 14 dahingehend, dass sie die Position des Einwirkens 24 elektrischer und/oder taktiler Reize bestimmen, um die den Nutzer auf die Lage des Objekts 12 aufmerksam zu machen. Hierzu setzen sie die übermittelte Lage des Objekts 12 in entsprechende Positionsdaten 24 22 um. Die Mittel 18 umfassen ferner weitere Mittel 20 zum Erzeugen von Steuersignalen für die ermittelten Aktuatoren 22. Diese Mittel 20 erzeugen aus den Positionsdaten 24 Aktivierungssignale für den oder die Akturator(en) 22, die sich an der von den Mitteln 18 ermittelten Position 24 des Einwirkens elektrischer und/oder taktiler Reize befinden, adressieren also die entsprechenden Aktuatoren 22. Obwohl die Mittel 16, 18 und 22 als getrennte Einheiten in Fig. 1 dargestellt sind, können sie in einer Einheit zusammengefasst sein, beispielsweise in einer Objektlage-Erkennungs- und Aktuator-Ansteuereinheit in Form eines Rechners, der den in Fig. 2 gezeigten und nachfolgend beschriebenen Algorithmus ausführt. Eine derartige Einheit kann dann die Aktivierungssignale für die Aktuatoren 22 am Körper des Nutzers über eine geeignete drahtgebundene oder auch drahtlose Schnittstelle übertragen.

Fig. 2 zeigt den Ablauf einer Softwareimplementierung des erfindungsgemäßen Verfahrens zum Informieren des Nutzers 14 über die Lage des Objekts 12 in Bezug auf die Nutzerposition. Die Software kann in der Vorrichtung 10 von Fig. 1 implementiert sein, die zum Ausführen einen geeigneten Prozessor aufweist. Das in Fig. 2 gezeigte Verfahren zum Informieren eines Nutzers über die Lage einer Informationsquelle in Bezug auf die Nutzerposition weist im Wesentlichen die folgenden Schritte auf: zunächst wird in Schritt S10 die Lage einer Informationsquelle, in Fig. 1 des Objekts 12 in Bezug auf die Nutzerposition 14 ermittelt. Das kann wie bereits oben erwähnt durch die Auswertung von Kamerabildern oder auch über eine geeignete Sensorik erfolgen. Anschließend werden in einem Schritt S12 taktile und/oder elektrische Reize zum unmittelbaren Einwirken auf den Nutzer an einer der ermittelten Lage der Informationsquelle entsprechenden Position 24 erzeugt. Dieser Schritt S12 unterteilt sich in folgende Unterschritte: zunächst werden Steuersignalen für Aktuatoren in einem Schritt S121 zum unmittelbaren Einwirken auf den Nutzer erzeugt. Dies umfasst das Ermitteln der ermittelten Position 24 des Einwirkens elektrischer und/oder taktiler Reize am Körper des Nutzers 14, Adressieren der Aktuatoren 22 an der ermittelten Position 24 und schließlich das Erzeugen von Steuersignalen für die ermittelten Aktuatoren 22. Im darauf folgenden Schritt S122 werden dann die so erzeugten Steuersignale an die Aktuatoren übermittelt. Eine weitere Information kann an den Nutzer 14 durch Variation der Reizintensität übermittelt werden, insbesondere eine Information über eine mögliche Gefährdung durch das Objekt 12. Hierzu ist ein Schritt S123 vorgesehen, in dem die Intensität der Reize abhängig von Parametern der Informationsquelle eingestellt werden. Beispielsweise kann die ermittelte Entfernung oder Annäherungsgeschwindigkeit des Objekts 12 zur Reizintensitätvariation ausgewertet werden. Insbesondere kann die Reizintensität erhöht werden, wenn die Entfernung zum Objekt 12 niedrig ist.

### Bezugszeichen

- 10: Vorrichtung zum Informieren eines Nutzers über die Lage einer Informationsquelle 12 in Bezug auf die Nutzerposition 14
- 12: Informationsquelle bzw. Objekt
- 14: Nutzer bzw. Nutzerposition
- 16: Mittel zum Ermitteln der Lage der Informationsquelle 12 in Bezug auf die Nutzerposition 14
- 18: Mittel zum Erzeugen von taktilen und/oder elektrischen Reizen zum unmittelbaren Einwirken auf den Nutzer
- 20: Mittel zum Erzeugen von Steuersignalen für Aktuatoren
- 22: Aktuatoren
- 24: Position des Einwirkens elektrischer und/oder taktiler Reize
- S10-S12: Verfahrensschritte

## Patentansprüche

1. Verfahren zum Informieren eines Nutzers über die Lage einer Informationsquelle in Bezug auf die Nutzerposition, mit den folgenden Schritten:
Ermitteln der Lage einer Informationsquelle in Bezug auf die Nutzerposition (S10) und
Erzeugen von taktilen und/oder elektrischen Reizen zum unmittelbaren Einwirken auf den Nutzer an einer der ermittelten Lage der Informationsquelle entsprechenden Position (S12).

2. Verfahren nach Anspruch 1,
**dadurch gekennzeichnet, dass**
das Erzeugen von taktilen und/oder elektrischen Reizen (S12) das Erzeugen von Steuersignalen für Aktuatoren (S121) zum unmittelbaren Einwirken auf den Nutzer und Übermitteln der erzeugten Steuersignale an die Aktuatoren (S122) umfasst.

3. Verfahren nach Anspruch 2,
**dadurch gekennzeichnet, dass**
die Aktuatoren taktile und/oder elektrische Aktuatoren aufweisen.

4. Verfahren nach Anspruch 1, 2 oder 3,
**dadurch gekennzeichnet, dass**
das Erzeugen von taktilen und/oder elektrischen Reizen zum unmittelbaren Einwirken auf den Nutzer (S12) ferner das Einstellen der Intensität der Reize abhängig von Parametern der Informationsquelle umfasst (S123).

5. Verfahren nach Anspruch 4,
**dadurch gekennzeichnet, dass**
ein Parameter der Informationsquelle einer aus den folgenden ist: Entfernung der Informationsquelle vom Nutzer; Grad der Gefährdung des Nutzers durch die Informationsquelle; Geschwindigkeit der Informationsquelle; Bewegungsrichtung der Informationsquelle.

6. Vorrichtung (10) zum Informieren eines Nutzers über die Lage einer Informationsquelle (12) in Bezug auf die Nutzerposition (14) aufweisend:
Mittel (16) zum Ermitteln der Lage einer Informationsquelle (12) in Bezug auf die Nutzerposition (14) und
Mittel (18) zum Erzeugen von taktilen und/oder elektrischen Reizen zum unmittelbaren Einwirken auf den Nutzer an einer der ermittelten Lage der Informationsquelle entsprechenden Position (20).

7. Vorrichtung nach Anspruch 6,
**dadurch gekennzeichnet, dass**
die Mittel (18) zum Erzeugen von taktilen und/oder elektrischen Reizen Mittel (20) zum Erzeugen von Steuersignalen für Aktuatoren (22) zum unmittelbaren Einwirken auf den Nutzer und Übermitteln der erzeugten Steuersignale an die Aktuatoren (22) umfassen.

8. Vorrichtung nach Anspruch 7,
**dadurch gekennzeichnet, dass**
die Aktuatoren (22) taktile und/oder elektrische Aktuatoren aufweisen.

9. Vorrichtung nach Anspruch 6, 7 oder 8,
**dadurch gekennzeichnet, dass**
die Mittel (18) zum Erzeugen von taktilen und/oder elektrischen Reizen zum unmittelbaren Einwirken auf den Nutzer ferner derart ausgebildet sind, dass sie Intensität der Reize abhängig von Parametern der Informationsquelle einstellen können.

10. Vorrichtung nach Anspruch 9,
**dadurch gekennzeichnet, dass**
ein Parameter der Informationsquelle einer aus den folgenden ist: Entfernung der Informationsquelle vom Nutzer; Grad der Gefährdung des Nutzers durch die Informationsquelle; Geschwindigkeit der Informationsquelle; Bewegungsrichtung der Informationsquelle.

11. Anzug für einen Nutzer, insbesondere Pilotenanzug, der taktile und/oder elektrische Aktuatoren aufweist und zum Betrieb mit einer Vorrichtung nach einem der Ansprüche 6 bis 10 ausgebildet ist.
